# EUROPEAN PATENT APPLICATION

(11) **EP 2 357 824 A1**
(43) Date of publication of application: **17.08.2011**
(21) Application number: 10013865.0
(22) Date of filing: 21.10.2010
(51) Int. Cl.: H04N 7/24, H04N 21/2343, H04N 21/45, H04N 21/462, H04N 21/6547

(54) **Content distribution method and content reception device**

(30) Priority: 28.12.2009 JP 2009296680
(71) Applicant: Hitachi Consumer Electronics Co. Ltd., Tokyo 100-0004 (JP)
(72) Inventor: Koreeda, Hiroyuki, Tokyo 100-8220 (JP)
(74) Representative: Strehl Schübel-Hopf & Partner

(57) **Abstract**

Both a first method, in which a packet used to transmit distribution content is divided into two or more containers and the divided containers are transmitted at the same time, and a second method, in which the divided containers are transmitted at different times, are executed in a content distribution system (100). A download terminal (400) selectively executes high-speed downloading by the first method and low-speed downloading by the second method, thus allowing the user to use a download service according to the terminal performance.

## Description

### BACKGROUND OF THE INVENTION

The technical field relates to a system that uses a one-way, high-speed broadcast stream transmission line to simultaneously distribute content to multiple download terminals. For example, the technical field relates to a content distribution method that allows the content acquisition method to be selected according to the content processing capability of a download terminal.

For example, US2009/0094253A1, Hanai (corresponding to JP-A-2009-27390) describes a download-type distribution system where a content distribution server comprises a transmission unit that transmits metadata, which includes schedule information on content data distribution times, to multiple receivers and, in this system, the content distribution server distributes content at a distribution time described in the metadata and each receiver analyzes the received metadata and downloads content at the specified distribution time. This patent, which does not limit the transmission medium for content distribution, is applicable to content distribution via digital broadcast waves.

### SUMMARY OF THE INVENTION

In the distribution system described in US2009/0094253A1, 0, multiple receivers download content at the same time at the distribution time described in the metadata. If the content is distributed using a wide broadcast band and at a high bit rate when a receiver downloads the content that is distributed via digital broadcasting, there is a merit that the receiver completes the downloading quickly. In this case, however, the receiver is required to have the capability to receive a high-speed data stream without data loss and to accumulate the received data stream in storage. Conversely, if content is distributed at a low bit rate, there is a merit that the manufacturing cost of the receiver is low because the receiver is not required to have a high capability to receive the data stream and to accumulate the received data stream in storage. In this case, however, the problem is that it takes long to download and so the user must wait long until the downloaded content is played.

In view of the foregoing, both a first transmission method, in which a packet used to transmit distribution content is divided into two or more containers and the divided containers are transmitted at the same time, and a second transmission method, in which the divided containers are transmitted at different times, are executed in a content distribution system.

The method described above allows a receiver to selectively execute one of the first transmission method, in which content is downloaded at high speeds in a short time, and the second transmission method, in which the receiver downloads content at low speeds and therefore the processing load is low, according to the download processing capability, thus providing a user with a distribution service that allows both a high-performance high-end receiver and a low-cost low-end terminal to be used in the download distribution service.

Other objects, features and advantages of the invention will become apparent from the following description of the embodiments of the invention taken in conjunction with the accompanying drawings.

### BRIEF DESCRIPTION OF THE DRAWINGS

FIG 1 is a diagram showing an example of the block diagram that shows the system configuration of a content distribution system and a download terminal.
FIG 2 is a diagram showing the transmission format on a transmission line.
FIG 3 is a diagram showing an example of the packet configuration of transmitted modules.
FIGS. 4A, 4B, and 4C are diagrams showing examples of the packet configuration of packets transmitted in modules.
FIG 5 is a diagram showing an example of the configuration of metadata transmitted in IP packet containers.
FIG 6 is a diagram showing an example of the configuration of a control signal packet.
FIGS. 7A and 7B are diagrams showing examples of content distribution scheduling operation.

### DESCRIPTION OF THE EMBODIMENTS

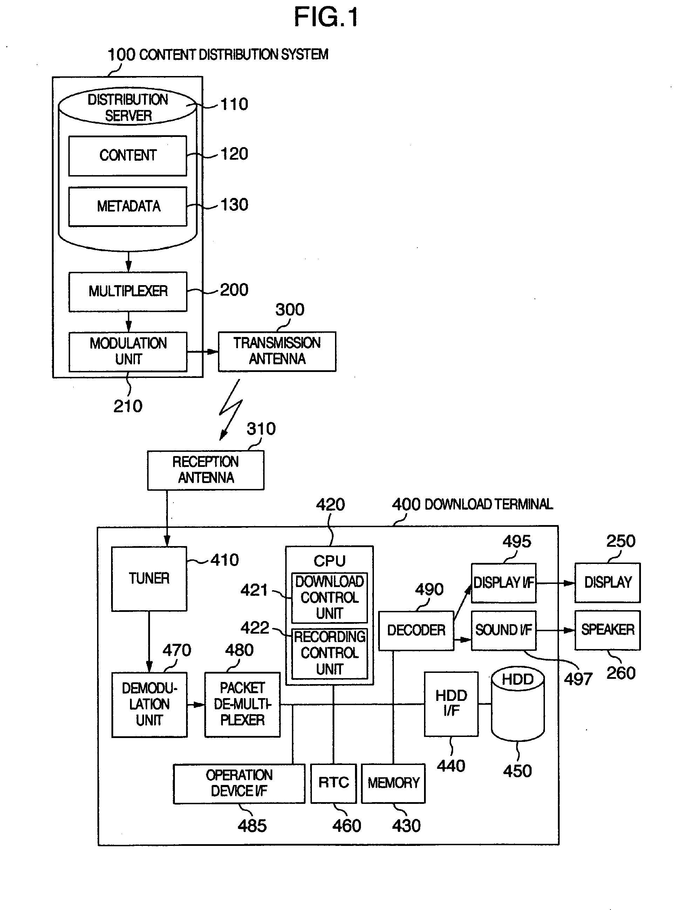

FIG 1 is a diagram showing an example of the configuration of a content distribution system 100 and a download terminal 400.

The content distribution system 100 at least comprises a distribution server 110, a multiplexing device 200, and a modulation device 210. The distribution server 110 comprises content 120 to be distributed and metadata 130 that stores the attribute and management information required for the search and reproduction of the content 120 to be distributed.

The content 120 and the metadata 130 are divided into small units, called packets, and are time-division multiplexed on a packet basis by the multiplexing device 200 into one stream data. The multiplexed stream data is modulated by the modulation device 210 in the modulation method used for the transmission line and is transmitted from a transmission antenna 300 as an electric wave.

The download terminal 400 comprises a tuner 410, a CPU 420, a memory 430, an HDD I/F(hard disk drive interface) 440, an HDD(hard disk drive) 450, an RTC(real-time clock) 460, a demodulation unit 470, a packet de-multiplexer 480, an operation device I/F 485, a decoder 490, a display I/F(interface) 495, and a sound I/F 497. The user operation screen is displayed on a display 250 via the display I/F 495 according to the user operation via the operation device such as a remote control connected to the operation device I/F 485.

The download terminal 400 has the real-time clock (RTC) 460 to constantly keep the correct real time that may be referenced by a software program stored in the memory 430 and has the timer function that causes the CPU 420 to execute a program or to run each processing unit at a specified time.

A large volume of data may be read from or written to the HDD 450, and written data is retained even when the power is turned off.

The download terminal 400 receives, via a reception antenna 310, the electric wave transmitted from the transmission antenna 300, selects a channel via the tuner 410, and demodulates the data using the demodulation unit 470.

The demodulated data stream is output from the demodulation unit 470. The packet de-multiplexer 480, which receives the demodulated data stream, may de-multiplex and retrieve from this data stream a program to be executed by the CPU 420 or the packets satisfying the condition specified by a download control unit 421.

A recording control unit 422 of the CPU 420 retrieves the packets, which contain the user-desired distribution content, through this filtering operation, buffers the retrieved packets in the memory 430, and then accumulates the retrieved packets in the HDD 450 via the HDD I/F 440.

If the content accumulated in the HDD 450 is video/sound content, the content is input to the memory 430, which works as the buffer, according to an instruction from the CPU 420 and, after that, input to the decoder 490. The decoder decodes the encoded video and sound of the content and displays the video information on the display 250 via the display I/F 495. The decoder also reproduces the sound information from a speaker 260 via the sound I/F 497.

If the content is an application program, the content is placed in the memory 430. The CPU 420 interprets and executes the content and displays the result on the display 250 via the display I/F 495.

Although an electric wave is used as an example of the content transmission line in this embodiment, a coaxial cable or an optical fiber may also be used as the transmission line in the distribution system. In that case, the transmission antenna 300 in FIG 1 is changed to a transmission device compatible with the transmission line. The reception antenna 310 and the tuner 410 are also changed to a reception device compatible with the transmission line. The modulation device 210 is changed to the modulation method used on the transmission line. The demodulation unit 470 is changed to the demodulation method used on the transmission line. Only the changes described above are required with no effect on other system elements.

The download control unit 421 and the recording control unit 422, though a part of the CPU in the above description, may be independent units. That is, the download control unit 421 and the recording control unit 422 may also be implemented by hardware as independent integrated circuits. In addition, the download control and the recording control may also be implemented by software by executing the download control program and the recording control program, which implement those functions, on the CPU 420.

Next, the following describes the transmission format of data transmitted by the content distribution system 100.

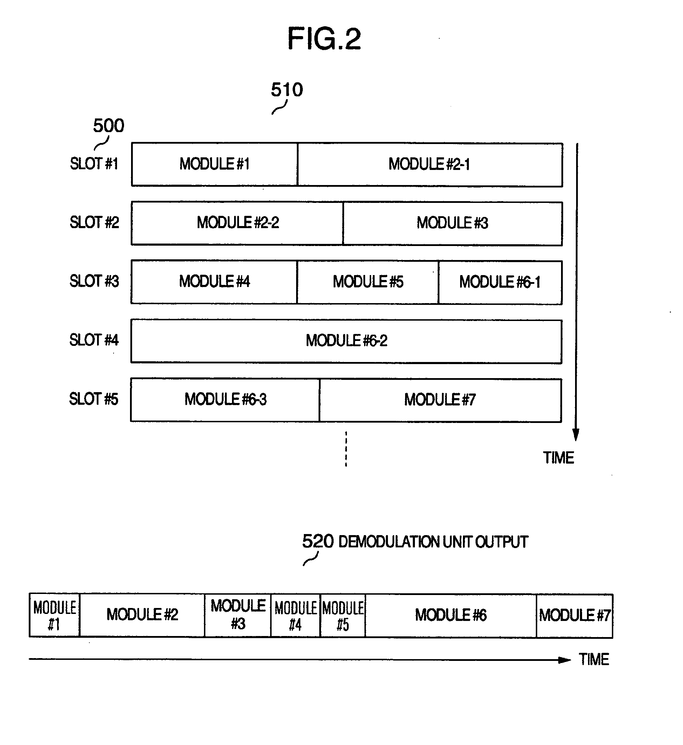

FIG 2 is a diagram showing an example of the transmission format of data transmitted by electric wave. This digital data stream is divided into fixed time units, called slots 500, for transmission. Each slot 500 may store multiple data units called modules 510. A module that is too large to be stored in one slot extends across multiple slots 500 when transmitted.

A specific channel of the received electric wave is selected by the tuner 410 and is demodulated by the demodulation unit 470. A demodulation unit output 520 is output as one bit stream of the demodulated electric signal. The demodulation unit 470 outputs the modules according to the time series of the slots. The modules divided into slots are concatenated again into one module for output.

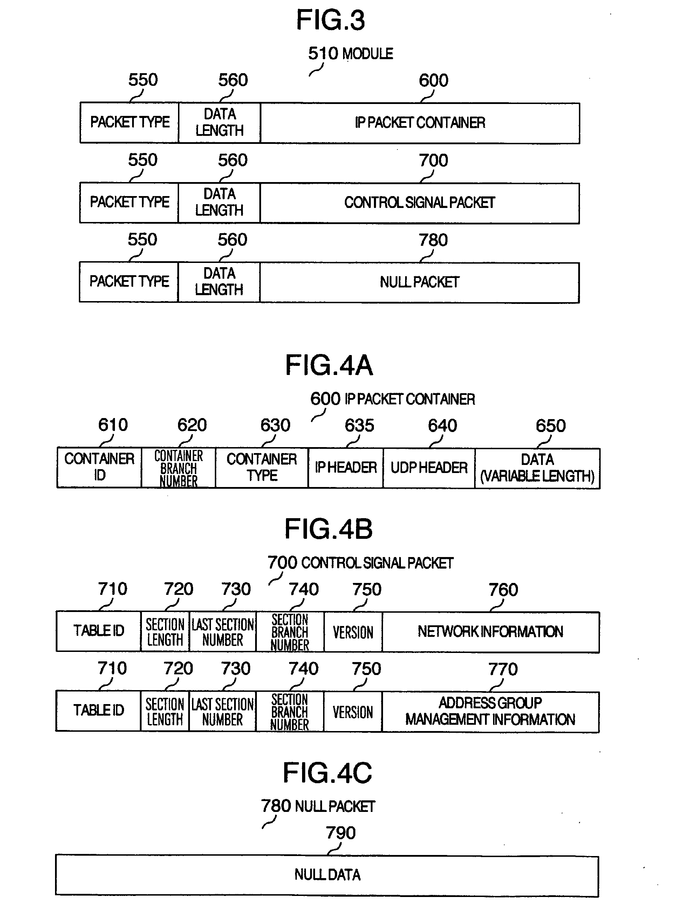

The module 510 is data having the configuration shown in FIG 3. The module 510 begins with at least the two fields, packet type 550 and data length 560, followed by the data body. The packet type 550 indicates the data type of the data body, and the data length 560 indicates the data size of the data body.

At least one of the data types -- IP packet, control signal, and NULL -- is defined in the packet type 550. When the data type indicates an IP packet, the data body stores an IP packet container 600 in which IP packets are stored. When the data type indicates a control signal, the data body stores a control signal packet 700. When the data type is a NULL packet, the data body stores a NULL packet 780. FIG 4C shows the contents of a NULL packet.

The IP packet container 600 is the data format for transmitting distribution content or metadata as an IP packet. FIG 4A shows its content. A container ID 610 is an ID that uniquely identifies data to be distributed. A container branch number 620 is a branch number indicating the sequence number used when content, which is transferred in multiple containers, is rearranged into one piece of data.

A container type 630, which specifies the format of the IP packet stored in the following field, indicates whether the following IP packet has the IPv4 format, IPv6 format, or the special format generated by compressing IPv4 or IPv6 format. The following fields, IP header 635 and UDP header 640, contain header information defined generally by the Internet protocol for the IPv4 format or IPv6 format. When the container type 630 indicates the special format meaning that the IP packet is compressed, a part of the header information stored in the IP header 635 or UDP header 640 but not necessary for the transmission is sometimes omitted or changed.

The IP header 635 stores the source IP address, which uniquely identifies the distribution source, and the destination IP address, which uniquely identifies the distribution destination, according to the Internet standard specification.

At the end of the IP packet container 600, the data body is stored in a data body part 650 that is variable in length.

The data (variable length) 650 has a data type 661 and a data size 662 as the header information, followed by the data having the data type specified by the data type 661 and the size specified by the data size 662.

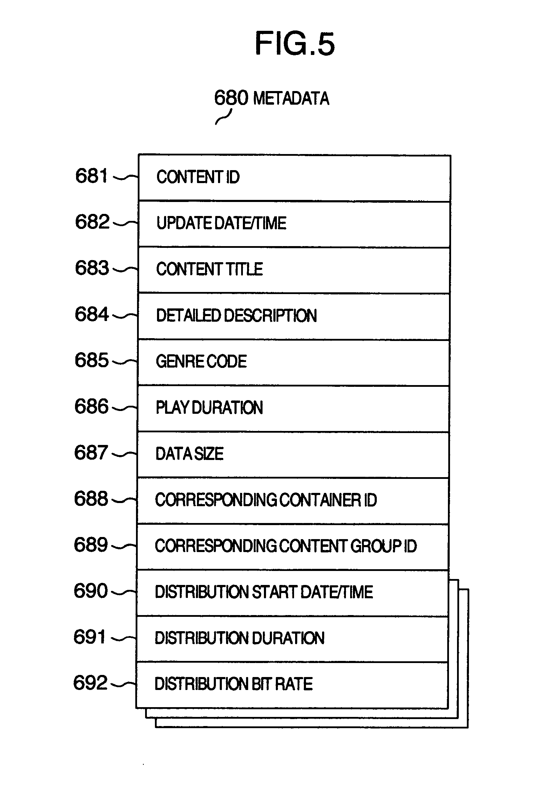

The data (variable length) 650 stores the content body 650 or metadata 680 shown in FIG 5.

The content body 650 stores video content or sound content. The video content is, for example, a video stream generated by multiplexing the video/sound into a transport stream format or a program stream format wherein the video information is encoded using a video codec such as MPEG2 or H.264/AVC and the sound information is encoded using a sound codec such as AAC or AC3. The sound content is a non-compressed PCM sound or a sound file compressed by a sound codec such as MP3 or AAC.

Not only video and sound data but XML data, a program, and multimedia data created by combining them with video, sound, or picture data may also be distributed as the content.

The metadata 680 is data, which describes attribute information related to various types of content to be distributed, is text coded by an XML-like tag description language. The metadata 680 stores data that uniquely identifies content to be distributed, data that is required for the user to make a search or to download, and data that is necessary for reproducing the content.

FIG 5 is a diagram showing an example of the metadata 680 on video content.
A content ID 681 is a field storing an ID that uniquely identifies the content. An update date/time 682 is a field storing the date/time when the metadata body 680 was updated last. Whether the metadata body 680 of the same content ID 681 as that referenced before has been updated or not is determined by checking if the update date/time 682 is updated.

A content title 683 is a field storing the character string of the content title. A detailed description field 684 is a field including information on the content description, performers, the director, the scriptwriter, and so on. A genre code 685 is a field storing the classification code of the genre to which the content belongs. A play duration 686 is a field storing the play duration of the video. The information is used by the user to search for distribution content or to browse information on distribution content. In addition, the information 683-686 is used also to search for content accumulated in the HDD 450 or browse the information on the content or as the banner display information on the content being played back.

A data size 687 is a field storing the data size of the content. A corresponding container ID 688 is a field storing the container ID of the IP packet container used to distribute the content. A corresponding content group ID 689 is a field storing the ID indicating to which group the content belongs when the content is managed by group. The metadata 680 also has information on a distribution start date/time 690 on which the content is distributed, a distribution duration 691 that is time required to download the content, and distribution-time distribution bit rate 692. Multiple sets of the information 690-692 may be specified, in which case the same content is distributed simultaneously for multiple times, once for each date/time.

The CPU 420 of the download terminal 400 displays the search function, which is based on the content information such as the information specified in the fields 682-686, on the display 250 to provide user with that function. The CPU 420 accepts a request for content, selected for downloading, from the user via the operation device I/F 485 and issues a download reservation instruction.

Upon receiving this instruction, the download control unit 421 of the download terminal 400 selects one of the distribution start dates/times 690 specified by the metadata 680 of the selected content and, some time before the selected time, causes the tuner 410 to select the channel via which the selected content is to be downloaded. In addition, the download control unit 421 acquires the container ID 688, corresponding to the content to be downloaded, from the meta information, sets up the packet de-multiplexer 480 to extract the content corresponding to this container ID 688, and places the download terminal 400 in the download wait state.

When the distribution start date/time 690 arrives while the download terminal 400 is in this state, the demodulation unit 470 outputs a data stream such as the demodulation unit output 520 shown in FIG 2. The packet de-multiplexer 480 extracts the containers specified by the container ID 688 to output only the containers of the content to be downloaded. The recording control unit 422 of the CPU 420 stores the content in the HDD 450. The CPU 420 completes the download processing when the containers corresponding to all container branch numbers 620 of the IP packet containers 600, in which the content is stored, are received and stored.

When the distribution duration 691 has elapsed, the download processing is forced to be terminated even if the download processing is not yet completed. After that, the CPU 420 references another distribution start date/time 690 and executes the download processing again to download only the containers, corresponding to the container branch numbers 620 that could not be acquired, to supplement the content. The download processing is completed when the containers corresponding to all container branch numbers 620 are acquired.

When multiple distribution start dates/times 690 are specified, the earliest date/time is usually selected. On a demodulation terminal having the broadcast recording function or other load-increasing data processing functions, another distribution start date/time 690 may be selected if the distribution start date/time 690 overlaps with the time for timer recording or other data processing. The distribution start date/time 690 may also be selected so that the download may be scheduled to achieve the power saving effect of the whole system.

Next, the following describes the configuration of the control signal packet 700.

When the packet type 550 in FIG 3 indicates a control signal, the control signal packet 700, such as the one shown in FIG 4B, is transmitted. The control signal packet is used to transmit the information necessary for the download terminal 400 to select a channel by the tuner 410 or to perform the IP packet filtering control processing by the packet de-multiplexer 480.

The control signal packet 700 begins with an ID called a table ID 710 and representing the type of the control signal, followed by a section length 720 representing the size of the data body. The section length 720 is followed by a last section number 730 representing the last branch number of a section that is divided into multiple packets. The last section number 730 is followed by a section branch number 740 representing the sequence used when the divided control signal packets are rearranged. The section branch number 740 is followed by a version 750 necessary for the update management of the control signal. The version 750 is followed by the control signal body.

The control signal packet 700 stores network information 760 when network information is specified in the table ID 710 as the type of the control information. The control signal packet 700 stores address group management information 770 when address group management information is specified the table ID 710 as the type of the control information.

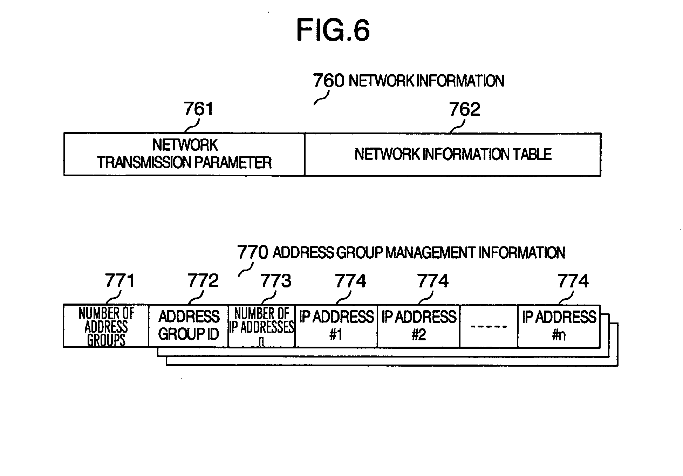

As shown in FIG 6, the network information 760 is composed at least of network transmission parameter 761 and a network information table 762. The network information 760 stores the frequency information, modulation method, modulation parameters, and network ID necessary for the selection of the transmission channel via which the content is distributed. The address group management information 770 stores the network configuration information including information on the other channels used on the broadcast transmission line. The network information 760 is used to select other channels. These are constantly monitored if it is updated and, if the channel configuration is changed, the network information management table in the download terminal 400 is updated to allow the channel selection operation to be performed based on the latest state.

The address group management information 770 is a table provided to manage multiple pieces of content as one group-managed content group to allow them to be downloaded at a time. There are multiple sets of fields, each composed of the field 772 and the following fields, one set for each of the number of address groups to be transmitted that is specified by a field 771. The address group ID 772 is an ID uniquely identifying a content group. A number-of-IP-addresses field 773 specifies the number of IP addresses that may be specified for the address group ID 772. The address group ID 772 is followed by the number of IP addresses 774 that is specified by the number-of IP-addresses field 773.

The IP address 774 may be a uniquely identifiable value or a group of IP addresses specified by an address a part of which is masked to allow any value to be specified for that digit.

The CPU 420 of the download terminal 400 compares the IP address 774 of the content belonging to an address group with the source IP address described in the IP header 635 to determine to which address group the transmitted content belongs. In addition, by using the corresponding address group ID stored in the metadata 680 for the search, multiple pieces of content belonging to the same address group may also be downloaded.

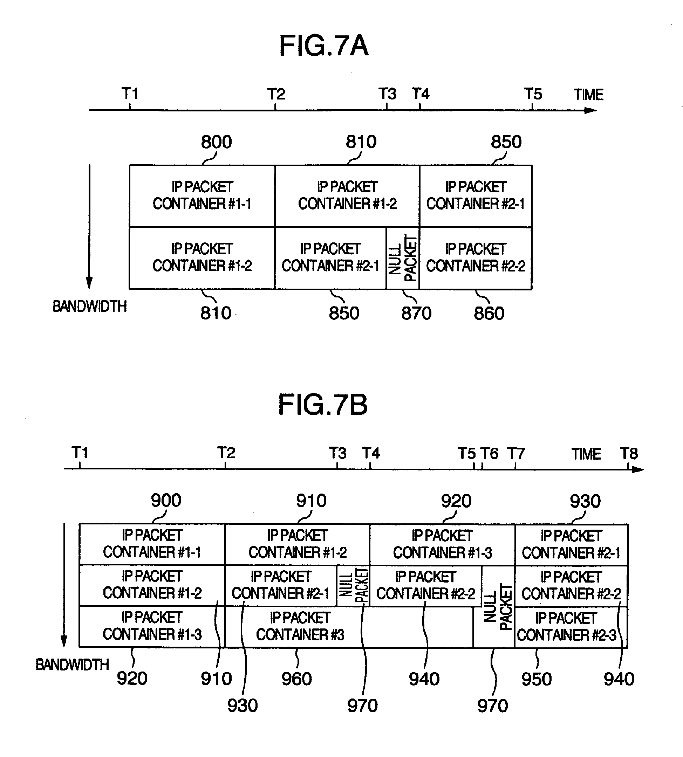

Referring to FIG 7, the following describes an example of a time-series-based distribution schedule operated by the distribution system that uses the content distribution service according to the transmission format described above.

In the example in FIG 7A, the content distribution system 100 divides the bandwidth (bit rate), over which content may be transmitted via a transmission channel, into two containers for transmission.

In addition, the content distribution system 100 divides the IP packet container group, which has the container ID provided for distributing one piece of content, into two for transmission. For example, the IP packet container group having the container ID#1 is divided into IP packet container #1-1 800 and IP packet container #1-2 810. The IP packet container group having the container ID#2 is divided into IP packet container #2-1 850 and IP packet container #2-2 860.

A container group is divided in one of many ways, for example, a container group is divided based on the odd numbers and even numbers of the container branch numbers 620 or based on the first half and the last half of the container branch numbers 620.

In this example, it is assumed that the data size of content in container ID#2 is a little bit smaller than that of content in container ID#1.

In the example in FIG 7A, the multiplexer 200 of the content distribution system 100 creates IP packet container #1-1 800 and IP packet container #1-2 810 beginning at time T1, and the modulation unit 210 divides the band into two and starts transmitting those containers at the same time. And, beginning at time T2 at which the transmission of those containers is completed, the multiplexer 200 creates IP packet container #1-2 810 again and creates IP packet container #2-1 850 newly, and the modulation unit 210 divides the band into two and transmits those containers. Because the data size of content in container ID#2 is smaller than that of content in container ID#1, the transmission of the content in container ID#2 is completed earlier and, in that case, the free band is filled with a NULL packet 870. Next, after time T4 at which the transmission of IP packet container #1-2 810 is completed, the modulation unit 210 transmits IP packet container #2-1 850 and IP packet container #2-2 860 at the same time and, at T5, completes the distribution of both containers.

At times T1, T2, T4, and T5 at which the distribution content is switched at a time, it is desirable that, though omitted in the figure, the NULL packet 870 be transmitted at a time for a short period of time as the operation switching margin on the reception side.

The operation according to the distribution schedule described above decreases the transmission efficiency as compared when one piece of content is transmitted simply in the time division manner using the full bandwidth.

However, a terminal such as a high-performance download terminal, capable of performing the download processing at a bit rate achieved by using the full band, downloads both IP packet container #1-1 800 and IP packet container #1-2 810 that are distributed beginning at time T1 and, so, completes the download processing more quickly. On the other hand, a download terminal, capable of downloading at a bit rate half as high as that achieved by using the full band, may download IP packet container #1-1, which is distributed beginning at time T1, and IP packet container #1-2 which is distributed beginning at time T2, sequentially. This means that even a low-cost download terminal may receive the distribution service.

Although divided into two in the example shown in FIG 7A, the content may also be divided into three or more for transmission.

FIG 7B is a diagram showing an example in which each of the content in IP packet container #1 and the content in IP packet container #2 is divided into three for transmission.

In this case, the band is divided into three to allow three pieces of content to be transmitted at the same time.

Beginning at time T1, the multiplexer 200 divides IP packet container #1 into three to create three IP packet containers, IP packet container #1-1, IP packet container #1-2, and IP packet container #1-3, and the modulation unit 210 modulates the three IP packet containers and transmits them at the same time. And, the modulation unit 210 retransmits IP packet container #1-2 beginning at T2, and IP packet container #1-3 beginning at time T4.

The multiplexer 200 divides IP packet container #2 into three to create three IP packet containers: IP packet container #2-1, IP packet container #2-2, and IP packet container #2-3. The modulation unit 210 transmits IP packet container #2-1 beginning at time T2, IP packet container #2-2 beginning at time T4, .and IP packet container #2-1, IP packet container #2-2, and IP packet container #2-3 at the same time beginning at time T7.

In this case, because there is a free transmission capacity from time T2 to time T7, another content with a capacity that may be transmitted using the free transmission capacity is transmitted in this example.

Another content, IP packet container #3, is transmitted using this free transmission capacity, beginning at time T2, in this example. In this case, a remaining free band, if any, is filled with a NULL packet 970.

In the case of FIG 7B, a high-performance download terminal, capable of downloading at a bit rate achieved by using the full band, completes the download processing quickly. On the other hand, a download terminal, capable of downloading at a bit rate one-third as high as that achieved by using the full band, may download the divided containers sequentially. This means that even a still lower-cost download terminal may receive the distribution service.

Which distribution method a download terminal uses for the download processing is determined by the download control unit 421. The download control unit 421 references the information on the distribution bit rate 692, defined in the metadata 680 on the distributed content, and compares the bit rate with the download processing capability of the terminal itself. If the information on the distribution bit rate 692 is compatible with the terminal itself, the download control unit 421 references the distribution start date/time 690 corresponding to the distribution bit rate 692 and downloads the content according to the schedule.

If the information on the distribution bit rate 692 is not compatible with the processing capability of the terminal, the download control unit 421 searches for another band-divided metadata 680, references the distribution start date/time 690 stored in the metadata 680 storing therein the distribution bit rate 692 compatible with the download capability of the terminal, and downloads the content according to the schedule. If the distribution bit rate 692 stored in any metadata 680 is higher than the download processing capability of the terminal, the download processing is not performed.

According to this embodiment, a download terminal having the high download-processing capability may complete the download processing quickly when used in the simultaneous content distribution service, such as a broadcast, carried out via a transmission line having a fixed band and, at the same time, a low-cost download terminal having the low download-processing capability may also download content at the speed according to the processing capability of the terminal. Therefore, this embodiment gives a high-performance terminal a better download service and, at the same time, gives a low-cost download terminal the similar content service, thus eliminating the barriers to the entry of download-capable terminals into the content service and encouraging more manufacturers to release more products.

A high-performance download terminal, which has the digital-broadcast storage recording function or the high-load data processing function, may select one of the following two download methods: one is the low-speed, low receiver-processing-load download method used during high-load recording processing or data processing and the other is the high-speed, short-time content download method used in the non-recording state. This ability allows one terminal to optimize the download processing according to the operation state in the terminal.

The invention is not limited to the embodiment described above but includes various modifications. For example, the embodiment described above is not necessarily limited to the one that has all described configurations. For a part of the configurations of the embodiment, some may be added, deleted, or replaced.

A part or the whole of the configurations and functions described above may be implemented by hardware by designing them using integrated circuits. The configurations and the functions described above may also be implemented by software by the processor interpreting and executing the programs that implement the functions. When a function is executed, the information such as the corresponding program, tables, and files may be stored in the memory or in the cache memory. When a function is not executed, the information such as the program, tables, and files may be stored in the memory, hard disk device, or IC card.

Note that only control lines and information lines considered to be necessary for the description are shown but that not all control lines or information lines of the product are shown. It should be considered that all configurations are actually connected each other.

## Claims

1. A content distribution method used by a content distribution device (100) to distribute content to a content reception device (400) wherein
said content distribution device (100) comprises a multiplexer (200),
said content distribution method comprising the steps by said multiplexer (200) of:
dividing a packet, used to transmit content, into two or more containers; and
transmitting stream information, which includes the containers, while switching between a first transmission method and a second transmission method, said first transmission method being a method in which the divided containers are multiplexed and transmitted at the same time, said second transmission method being a method in which the divided containers are multiplexed and transmitted at different times,
each of the containers has container identification information identifying the container,
said content distribution method further comprising the steps by said content reception device (400) of:
accepting a specification of content to be downloaded;
demodulating received stream information;
acquiring the container identification information on the containers, corresponding to the content, from meta-information (680) on the specified content; and
extracting the containers, corresponding to the acquired container identification information, from the demodulated stream information.

2. The content distribution method according to claim 1, further comprising the steps by said content reception device (400) of:
acquiring distribution bit rate information defined in the meta-information (680) on the specified content;
comparing the acquired distribution bit rate information with a download processing capability of said content reception device (400); and
if the distribution bit rate information indicates a value processable by said content reception device (400), downloading the stream information at a distribution start date/time included in the meta-information (680).

3. The content distribution method according to claim 2, further comprising the step by said multiplexer (200) of said content distribution device (100) of:
multiplexing the meta-information (680), which includes the distribution bit rate information and the content identification information identifying the content, and transmitting the multiplexed meta-information (680) to said content reception device (400).

4. A content reception device (400) that receives content from a content distribution device (100) wherein
said content distribution device (100) comprises a multiplexer (200) that divides a packet, used to transmit content, into two or more containers; and transmits stream information, which includes the containers, while switching between a first transmission method and a second transmission method, said first transmission method being a method in which the divided containers are multiplexed and transmitted at the same time, said second transmission method being a method in which the divided containers are multiplexed and transmitted at different times,
each of the containers has container identification information identifying the container, and
said content reception device (400) comprises:
an acceptance unit (485) that accepts a specification of content to be downloaded;
a demodulation unit (470) that demodulates received stream information; and
an extraction unit (480) that acquires the container identification information on the containers, corresponding to the content, from the meta-information (680) on the specified content and extracts the containers, corresponding to the acquired container identification information, from the demodulated stream information.

5. The content reception device (400) according to claim 4, further comprising:
a download control unit (421) that downloads the content wherein
said download control unit (421)
acquires distribution bit rate information defined in the meta-information (680) on the specified content;
compares the acquired distribution bit rate information with a download processing capability of said content reception device (400); and
if the distribution bit rate information indicates a value processable by said content reception device (400), downloads the stream information at a distribution start date/time included in the meta-information (680).

6. The content reception device (400) according to claim 5 wherein
the stream information includes therein the meta-information (680) that is multiplexed wherein the meta-information (680) includes the distribution bit rate information and the content identification information identifying the content.
